# EUROPÄISCHE PATENTANMELDUNG

(11) **EP 2 333 517 A2**
(43) Veröffentlichungstag der Anmeldung: **15.06.2011**
(21) Anmeldenummer: 10190785.5
(22) Anmeldetag: 11.11.2010
(51) Int. Cl.: G01N 15/06

(54) **Rußsensor**

(30) Priorität: 14.12.2009 DE 102009058260
(71) Anmelder: Continental Automotive GmbH, 30165 Hannover (DE)
(72) Erfinder: Achhammer, Roland, 93176, Beratzhausen (DE); Ante, Johannes, 93055, Regensburg (DE); Bierl, Rudolf, 93055, Regensburg (DE); Heinrich, Stephan, 84076, Pfeffenhausen (DE); Herrmann, Markus, 93051, Regensburg (DE); Lauerer, Wolfgang, 93164, Laaber (DE); Ott, Andreas, 93128, Steinsberg (DE); Reitmeier, Willibald, 93155, Hohenschambach (DE); Schädlich, Denny, 08223, Neustadt (DE); Weigl, Manfred, 93161, Viehhausen (DE); Wildgen, Andreas, 93152, Nittendorf (DE)

(57) **Zusammenfassung**

Die Erfindung betrifft einen Rußsensor zur Detektion von Rußpartikeln in einem Abgasstrom mit einer Struktur aus interdigital ineinander greifenden Messelektroden die auf einem Substrat aufgebracht sind, wobei der elektrische Widerstand zwischen den Messelektroden als Maß für die Rußbeladung des Abgasstroms gemessen wird.

Um einen Rußsensor anzugeben, mit welchem auf kostengünstige Art und Weise eine fehlerhafte Messung erkannt werden kann, ist die Struktur aus interdigital ineinander greifenden Messelektroden in zwei Bereiche aufgeteilt, von denen sich auf einem ersten Bereich keine Rußpartikel ablagern können und auf einem zweiten Bereich die Ablagerung von Rußpartikeln aus dem Abgasstrom erfolgt und wobei der erste Bereich und der zweite Bereich gleichzeitig den übrigen in dem Abgasstrom herrschenden Bedingungen ausgesetzt sind.

## Beschreibung

Die Erfindung betrifft einen Rußsensor zur Detektion von Rußpartikeln in einem Abgasstrom mit einer Struktur aus interdigital ineinander greifenden Messelektroden die auf einem Substrat aufgebracht sind, wobei der elektrische Widerstand zwischen den Messelektroden als Maß für die Rußbeladung des Abgasstroms gemessen wird.

Die Anreicherung der Atmosphäre mit Schadstoffen aus Abgasen wird derzeit viel diskutiert. Damit verbunden ist die Tatsache, dass die Verfügbarkeit fossiler Energieträger begrenzt ist. Als Reaktion darauf werden beispielsweise Verbrennungsprozesse in Brennkraftmaschinen thermodynamisch optimiert, so dass deren Wirkungsgrad verbessert wird. Im Kraftfahrzeugbereich schlägt sich dies in der zunehmenden Verwendung von Dieselmotoren nieder. Der Nachteil dieser Verbrennungstechnik ist gegenüber optimierten Otto-Motoren jedoch ein deutlich erhöhter Ausstoß von Ruß. Der Ruß ist besonders durch die Anlagerung polyzyklischer Aromate stark krebserregend, worauf in verschiedenen Vorschriften bereits reagiert wurde. So wurden beispielsweise Abgas-Emissionsnormen mit Höchstgrenzen für die Rußemission erlassen. Daher besteht die Notwendigkeit preisgünstige Sensoren anzugeben, die den Rußgehalt im Abgasstrom von Kraftfahrzeugen zuverlässig messen.

Der Einsatz derartiger Rußsensoren dient der Messung des aktuell ausgestoßenen Rußes, damit dem Motormanagement in einem Automobil in einer aktuellen Fahrsituation Informationen zukommen, um mit regelungstechnischen Anpassungen die Emissionswerte zu reduzieren. Darüber hinaus kann mit Hilfe der Rußsensoren eine aktive Abgasreinigung durch Abgas-Rußfilter eingeleitet werden oder eine Abgasrückführung zur Brennkraftmaschine erfolgen. Im Falle der Rußfilterung werden regenerierbare Filter verwendet, die einen wesentlichen Teil des Rußgehaltes aus dem Abgas herausfiltern. Benötigt werden Rußsensoren für die Detektion von Ruß, um die Funktion der Rußfilter zu überwachen bzw. um deren Regenerationszyklen zu steuern.

Dazu kann dem Rußfilter, der auch als Dieselpartikelfilter bezeichnet wird, ein Rußsensor vorgeschaltet sein und/oder ein Rußsensor nachgeschaltet sein.

Der dem Dieselpartikelfilter vorgeschaltete Sensor dient zur Erhöhung der Systemsicherheit und zur Sicherstellung eines Betriebes des Dieselpartikelfilters unter optimalen Bedingungen. Da dies in hohem Maße von der im Dieselpartikelfilter eingelagerten Rußmasse abhängt, ist eine genaue Messung der Partikelkonzentration vor dem Dieselpartikelfiltersystem, insbesondere die Ermittlung einer hohen Partikelkonzentration vor dem Dieselpartikelfilter, von hoher Bedeutung.

Ein dem Dieselpartikelfilter nachgeschalteter Sensor bietet die Möglichkeit, eine fahrzeugeigene Diagnose vorzunehmen und dient ferner der Sicherstellung des optimalen Betriebes der Abgasnachbehandlungsanlage.

Im Stand der Technik hat es verschiedene Ansätze zur Detektion von Ruß gegeben. Ein in Laboratorien weithin verfolgter Ansatz besteht in der Verwendung der Lichtstreuung durch die Rußpartikel. Diese Vorgehensweise eignet sich gut für aufwändige Messgeräte. Wenn versucht wird, dies auch als mobiles Sensorsystem im Abgasstrang einzusetzen, muss festgestellt werden, dass diese Ansätze zur Realisierung eines optischen Sensors in einem Kraftfahrzeug mit sehr hohen Kosten verbunden sind. Weiterhin bestehen ungelöste Probleme bezüglich der Verschmutzung der benötigten optischen Fenster durch Verbrennungsabgase.

Die deutschen Offenlegungsschrift DE 199 59 871 A1 offenbart einen Sensor und Betriebsverfahren für den Sensor, wobei beide auf thermischen Betrachtungen basieren. Der Sensor besteht aus einem offenen porösen Formkörper wie beispielsweise einer wabenförmigen Keramik, einem Heizelement und einem Temperaturfühler. Wird der Sensor mit einem Messgasvolumen in Verbindung gebracht, so lagert sich Ruß darauf ab. Zur Messung wird der in einem Zeitraum abgelagerte Ruß mit Hilfe des Heizelementes zum Zünden gebracht und verbrannt. Die bei der Verbrennung entstehende Temperaturerhöhung wird gemessen.

Derzeit sind Partikelsensoren für leitfähige Partikel bekannt, bei denen zwei oder mehrere metallische Elektroden vorgesehen sind, die kammartig oder auch interdigital ineinandergreifende Messelektroden aufweisen. Rußpartikel, die sich auf diesen Sensorstrukturen ablagern, schließen die Messelektroden kurz und verändern damit die Impedanz der Elektrodenstruktur. Mit steigender Partikelkonzentration auf der Sensorfläche wird auf diese Weise ein abnehmender Widerstand bzw. ein zunehmender Strom bei konstanter angelegter Spannung zwischen den Messelektroden messbar. Ein derartiger Rußsensor wird zum Beispiel in der DE 10 2004 028 997 A1 offenbart.

Die kammartige (interdigitale) Messelektrodenstruktur dieser Rußsensoren wird in der Regel aus dünnen nebeneinander liegenden Leiterbahnen gebildet. Die Leiterbahnen haben z. B. einen Abstand von 10 µm voneinander. Neben der gewünschten Widerstandsänderung des Rußsensors durch eine Rußbeladung der Kammartigen Struktur aus Messelektroden kann sich der Widerstand des Rußsensors auch durch ungewollte Kurzschlüsse ändern. Diese ungewollten Kurzschlusse können z. B. durch eine zerkratzte oder partiell abgelöste Messelektrode hervorgerufen werden. Der gemessene Widerstandswert des Rußsensors würde durch diese ungewollten Kurzschlüsse verfälscht werden, was nur durch eine regelmäßige Funktionsdiagnose des Rußsensors festgestellt werden muss, um bestehende gesetzliche Anforderungen an die Zuverlässigkeit von Abgasnachbehandlungssystemen zu erfüllen. Darüber hinaus können die Widerstandswerte durch das Substrat selber, auf dem die Messelektroden angeordnet sind, beeinflusst werden. Vor allem, wenn das Substrat erhitzt wird können Ströme über das heiße Substrat von einer zur anderen Messelektrode fließen. Auch ungewollte Ablagerungen, wie zum Beispiel Asche, können zwischen den Messelektroden Ströme fließen lassen, die die Messung der Rußbeladung verfälschen.

Die Aufgabe der Erfindung ist es daher einen Rußsensor anzugeben, mit welchem auf kostengünstige Art und Weise eine fehlerhafte Messung erkannt werden kann.

Die Aufgabe wird durch die Merkmale des unabhängigen Anspruches gelöst.

Dadurch, dass die Struktur aus interdigital ineinander greifenden Messelektroden in zwei Bereiche aufgeteilt ist, von denen sich auf einem ersten Bereich keine Rußpartikel ablagern können und auf einem zweiten Bereich die Ablagerung von Rußpartikeln aus dem Abgasstrom erfolgt, wobei der erste Bereich und der zweite Bereich gleichzeitig den übrigen in dem Abgasstrom herrschenden Bedingungen ausgesetzt sind, existiert immer ein Vergleichsbereicht, der nicht durch Asche, Kurzschlüsse durch mechanische Beschädigungen oder Metallpartikel aus dem Verbrennungsmotor in seinen elektrischen Eigenschaften verändert werden kann. Alle anderen Änderungen der Eigenschaften des Rußsensors werden jedoch von beiden Bereichen gleichzeitig vollzogen. Zunächst ist die Änderung der Temperatur des Rußsensors sowohl durch die heißen Abgase als auch während der Aufheizung zur Regeneration der Struktur der Messelektroden mit einer Änderung des elektrischen Widerstands des Substrates verbunden. Diese Widerstandsänderung vollzieht sich sowohl in dem ersten Bereich als auch in dem zweiten Bereich gleichzeitig, da beide Bereiche gleichzeitig den übrigen in dem Abgasstrom herrschenden Bedingungen ausgesetzt sind. Damit kann die temperaturabhängige Widerstandsänderung des Substrates erkannt und kompensiert werden. Weitere Bedingungen die sich im Abgasstrom ändern können sind die Feuchtigkeit die auf das Substrat wirkt oder die Alterung des Substrates der Rußsensors in laufe seines Einsatzes. Auch diese Änderungen können zu veränderten Widerstandswerten des Substrates führen und sie können mit der erfindungsgemäßen Aufteilung des Rußsensors in einen ersten und einen zweiten Bereich erkannt werden.

Bei einer Weiterbildung der Erfindung besteht das Substrat aus Keramik. Es können zum Beispiel Aluminiumoxyd (A1₂O₃), Zirkonoxyd, Siliziumdioxyd (SiO₂), LTCC (Low Temperature Cofired Ceramics), oder HTCC (High Temperature Cofired Ceramic) eingesetzt werden. Diese Materialien besitzen einen hohen elektrischen Widerstand und sie halten den hohen Temperaturen im Abgasstrang stand.

Bei einer Ausgestaltung der Erfindung ist die Struktur aus interdigital ineinander greifenden Messelektroden aus Dickschichtelektroden aufgebaut. Mit Dickschichtverfahren lassen sich robuste Elektrodenstrukturen sehr kostengünstig herstellen.

Bei einer weiteren Ausgestaltung ist die Struktur aus interdigital ineinander greifenden Messelektroden aus Dünnschichtelektroden aufgebaut. Mit Dünnschichtverfahren können sehr feien Strukturen mit hoher Präzision hergestellt werden, was die Herstellung eines Rußsensors mit einer hohen Messempfindlichkeit erlaubt.

Bei einer Weiterbildung der Erfindung ist der erste Bereich mit einer hochohmigen Deckschicht versehen. Diese Deckschicht kann zum Beispiel aus Siliziumnitrid, Siliziumdioxyd (SiO₂), Aluminiumoxyd (A1₂O₃), Zirkonoxyd, LTCC (Low Temperature Cofired Ceramics) oder HTCC (High Temperature Cofired Ceramic) bestehen. Durch eine solche Deckschicht wird sichergestellt, dass sich auf den Messelektroden des ersten Bereichs keine Rußpartikel absetzen können. Beim Freiheizen den Messelektroden können daher auch keine Aschepartikel im ersten Bereich auf der Struktur aus Messelektroden zurück bleiben.

Dabei kann es vorteilhaft sein, wenn der erste Bereich mit einer Deckschicht mit einem genau definierten elektrischen Widerstand versehen ist. Wenn man diesen genau definierten elektrischen Widerstand kennt, kann man ihn in die Vergleichsbetrachtungen zwischen den Widerstandswerten des ersten Bereiches und denen des zweiten Bereiches einbeziehen. Dabei ist es besonders vorteilhaft, wenn man die Temperaturabhängigkeit der Widerstandsänderung der Deckschicht kennt und diese mit in die Vergleichsbetrachtungen zwischen den Widerstandswerten des ersten Bereiches und denen des zweiten Bereiches einbezieht.

Im Folgenden wird die vorliegende Erfindung unter Bezugnahme auf die begleitenden Zeichnungen anhand einer bevorzugten Ausführungsform erläutert. Diese Ausführungsform umfasst einen Rußsensor für den Einsatz in einem Kraftfahrzeug. Es zeigen:
- Figur 1:: einen Rußsensor,
- Figur 2:: die Wirkungsweise des Rußsensors,
- Figur 3:: die in einem Kraftfahrzeug fest installierte Auswerteschaltung zur fahrzeugeigenen Funktionsdiagnose des Rußsensors,
- Figur 4:: ein Kraftfahrzeug mit einer Brennkraftmaschine.

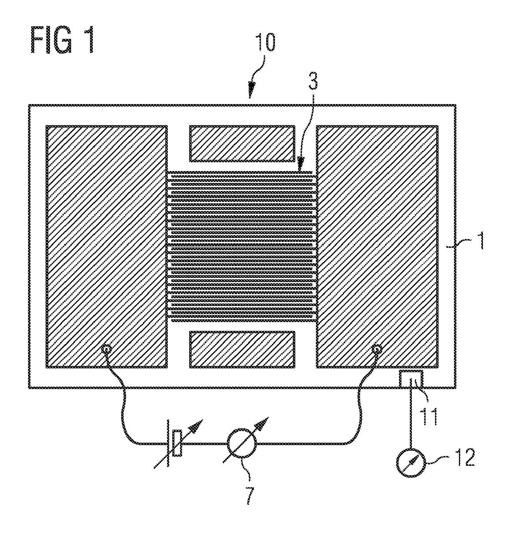

Figur 1 zeigt einen Rußsensor 10, der aus einem Substrat 1, einem hier nicht dargestellten Heizelement sowie einer Struktur aus Messelektroden 3 aufgebaut ist. Das Substrat 1 kann aus einem Keramikmaterial hergestellt sein, oder aus einem anderen Material, das elektrisch isolierende Eigenschaften aufweist und der Abbrandtemperatur von Ruß problemlos standhält. Um den Rußsensor 10 von Ruß freizubrennen wird der Rußsensor 10 typischer Weise mit Hilfe einer elektrischen Widerstandsheizung auf Temperaturen zwischen 500 und 800 °C erhitzt. Diese Temperaturen muss das elektrisch isolierende Substrat 1 ohne Beschädigungen vertragen. Die Struktur der Messelektroden 3 ist hier beispielhaft als kammartige (interdigitale) Struktur ausgebildet, wobei zwischen zwei Messelektroden immer ein elektrisch isolierender Bereich des Substrats 1 zu erkennen ist. Der Stromfluss zwischen den Elektrodenstrukturen wird mit Hilfe eines Strommesselementes 7 gemessen. Solange der Rußsensor 10 völlig frei von Rußpartikeln 4 ist, wird durch das Strommesselement 7 nur ein sehr kleiner Gleichstrom messbar sein, da zwischen den Messelektroden 3 immer ein Bereich des Substrats 1 vorhanden ist, der elektrisch isolierend wirkt und der nicht von Rußpartikeln 4 überbrückt wird. Weiterhin zeigt Figur 1 einen Temperatursensor 11 als Bestandteil des Rußsensors 10 mit einer Temperaturauswerteelektronik 12, die zur Überwachung der im Rußsensor 10 herrschenden Temperatur vor allem beim Abbrand der Rußbeladung auf dem Rußsensor 10 dient. Beim Abbrand des Rußes mit der elektrischen Widerstandsheizung wird auch das Substrat 1 auf Temperaturen zwischen 500 und 800 °C erhitzt, wobei sich die Widerstandswerte des Substrates hin zu hohen Temperaturen deutlich ändern.

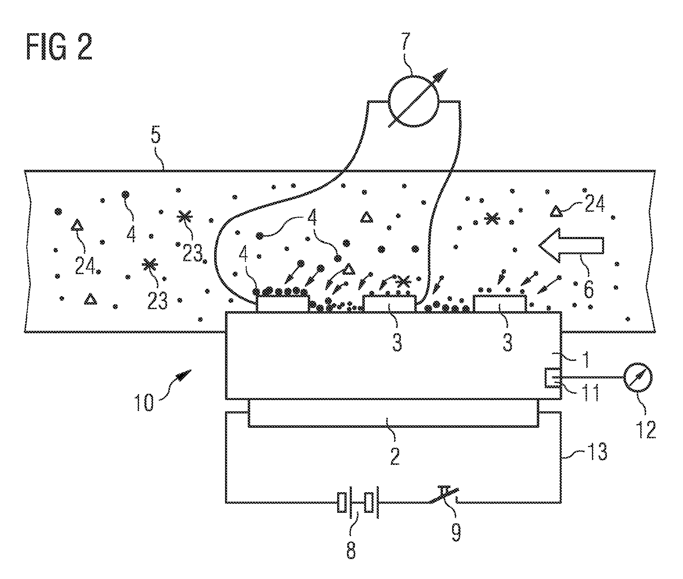

Figur 2 zeigt nun die Wirkungsweise des Rußsensors 10. Hier ist der Rußsensor 10 in einem Abgasrohr 5 angeordnet, durch das ein mit Rußpartikeln 4 beladener Abgasstrom 6 geleitet wird. Der Abgasstrom 6 kann neben den Rußpartikeln 4 auch noch weitere Bestandteile wie zum Beispiel Wasser 23, Kohlenwasserstoffe 24, Motoröl, Metallpartikel aus mechanischem Abrieb und/oder Ascheanteile aus verbrannten Additiven enthalten. Die Strömungsrichtung des Abgasstromes 6 wird durch den Pfeil angedeutet. Die Aufgabe des Rußsensors 10 ist es nun, die Konzentration der Rußpartikel 4 im Abgasstrom 6 zu messen. Dazu ist der Rußsensor 10 so im Abgasrohr 5 angeordnet, dass die Struktur aus Messelektroden 3, dem Abgasstrom 6 und somit den Rußpartikeln 4 zugewandt ist. Aus dem Abgasstrom 6 setzen sich Rußpartikel 4 sowohl auf den Messelektroden 3 als auch in den Zwischenräumen zwischen den Messelektroden 3 auf den isolierenden Bereichen des Substrats 1 ab. Wenn sich genügend Rußpartikel 4 auf den isolierenden Bereichen zwischen die Messelektroden 3 abgesetzt haben, wird aufgrund der Leitfähigkeit der Rußpartikel 4 ein erhöhter Gleichstrom zwischen den Messelektroden 3 fließen, der vom Strommesselement 7 erfasst wird. Die Rußpartikel 4 überbrücken somit die elektrisch isolierenden Zwischenräume zwischen den Messelektroden 3. Auf diese Art und Weise kann mit dem hier abgebildeten Rußsensor 10 die Beladung des Abgasstromes 6 mit Rußpartikeln 4 gemessen werden.

Zudem zeigt der Rußsensor 10 in Figur 2 das Heizelement 2, das mit dem Heizstromkreis 13 aus der Heizstromversorgung 8 mit elektrischem Strom versorgt werden kann. Um den Rußsensor 10 auf die Abbrandtemperatur der Rußpartikel 4 zu erhitzen, wird der Heizstromschalter 9 geschlossen, womit sich das Heizelement 2 erwärmt und somit der gesamte Rußsensor 10 erhitzt wird. Darüber hinaus ist ein Temperatursensor 11 im Rußsensor 10 integriert, der mit Hilfe der Temperaturauswerteelektronik 12 den Vorgang des Aufheizens des Rußsensors 10 und damit den Abbrandvorgang der Rußpartikel 4 überwacht. Das elektrische Heizelement 2 kann derart ausgebildet sein, dass es gleichzeitig als Temperatursensor 11 verwendet werden kann.

Das Strommesselement 7, die Temperaturauswerteelektronik 12 sowie der Heizstromschalter 9 sind hier exemplarisch als diskrete Bauteile dargestellt, selbstverständlich können diese Bauteile Bestandteil einer mikroelektronischen Schaltung sein, die beispielsweise in einem Steuergerät für den Rußsensor 10 integriert ist.

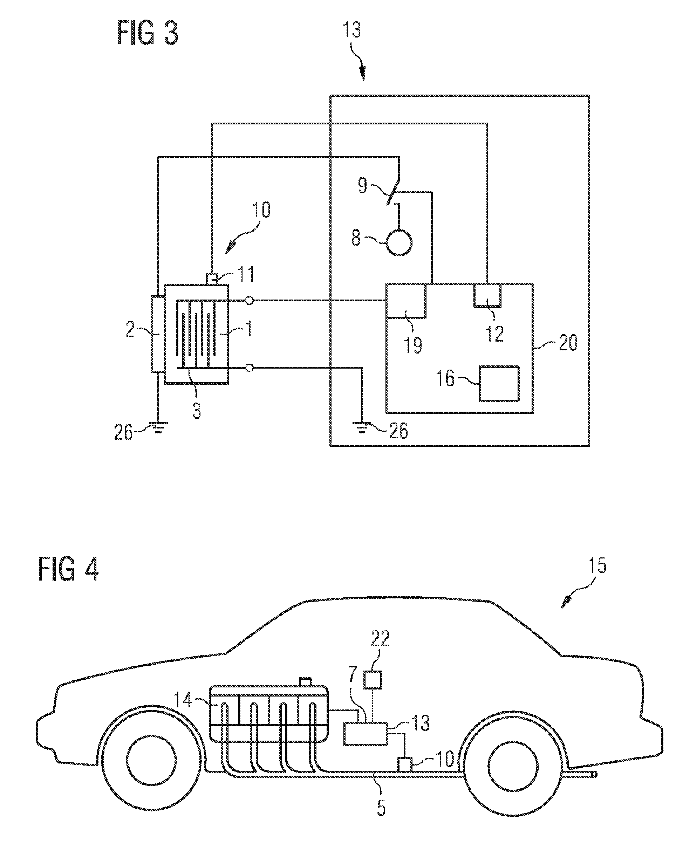

Figur 3 zeigt die in einem Kraftfahrzeug 15 fest installierte Auswerteschaltung 13 zur fahrzeugeigenen Funktionsdiagnose des Rußsensors 10 und/oder zur Erkennung von weiteren Bestandteilen im Ruß. Der Rußsensor 10 weist eine fingerartig ineinandergreifende Messelektrodenstruktur auf, die bei einem intakten Rußsensor 10 keinerlei metallische Kurzschlüsse aufweist. Auf und zwischen die Messelektroden 3 setzen sich im Messbetrieb des Sensors Rußpartikel 4 ab, die zu einem Stromfluss zwischen den Messelektroden 3 führen, der als Maß für die Rußbeladung des Abgasstroms dient. Ab einer bestimmten Menge abgelagerter Rußpartikel 4 auf den Messelektroden 3 wird jedoch eine maximale Leitfähigkeit über die Rußschicht erreicht, die auch bei einer weiteren Rußablagerung nicht weiter vergrößert werden kann. Daher wird der Rußsensor 10 ab einer bestimmen Menge abgelagerter Rußpartikel "blind" für eine weitere Messung der Rußkonzentration im Abgas. Es ist nun notwendig den Rußsensor 10 durch das Abbrennen der Rußschicht auf den Messelektroden 3 zu regenerieren. Dazu wird ein Heizstrom durch das Einschalten des Heizstromschalters 9 von der Heizstromversorgung 8 zum Heizelement 2 geleitet. Der Rußsensor 10 wird kontrolliert erwärmt. Die Kontrolle der Erwärmung des Rußsensors 10 erfolgt mit dem am oder im Rußsensor 10 ausgebildeten Temperatursensor 11. Die Abhängigkeit des Rußsensorwiderstandes oder dessen Leitfähigkeit (die Leitfähigkeit entspricht dem Reziproken Widerstand) von der Temperatur am Rußsensor 10 kann von der Auswerteschaltung 13 aufgezeichnet werden. Dies bildet die Funktion des Widerstands des realen Rußsensors 10 von seiner Temperatur. Die Funktion des Widerstands eines vollständig intakten Rußsensors 10 von dessen Temperatur kann im elektronischen Speicher 16 abgelegt sein. Neben der Widerstandsänderung über die Messelektrodenstruktur aus der Ablagerung von Rußpartikeln ergeben sich parasitäre Widerstandsänderungen durch z.B. Asche, Metallpartikel oder die deutliche Leitfähigkeitserhöhung des Substrates 1 beim Erreichen von hohen Temperaturen (ab etwa 600°C) .

Diese Funktionen beschrieben die Temperaturkoeffizienten des realen und des vollständig intakten Rußsensors 10. Die deutlich unterschiedlichen Temperaturkoeffizienten von intakten und defekten Rußsensoren resultieren aus der Tatsachen, dass Kohlenstoff und damit Ruß ein typischer Heißleiter ist und metallische Leiter typische Kaltleiter sind. Die Funktion des Widerstands des Rußsensors 10 von dessen Temperatur und damit sein Temperaturkoeffizient wird wesentlich davon abhängen, ob ein metallischer Leitvorgang oder die Kohlenstoff/Ruß Leitung dominiert. Nun ist es möglich den gemessenen Temperaturkoeffizienten auf dem zweiten Bereich des Rußsensors 10 mit dem des ersten Bereiches, als mit dem des intakten Rußsensors 10, zu vergleichen und anhand dieses Vergleiches einen defekten Rußsensor 10 zu erkennen und/oder die Defekte elektronisch zu kompensieren.

Der Temperaturkoeffizient beschreibt die relative Änderung einer physikalischen Größe in Abhängigkeit von der Änderung der Temperatur gegenüber einer Bezugstemperatur. Der Temperaturkoeffizient eines Widerstandes gibt die Änderung des Widerstandswertes des Widerstandes in Abhängigkeit von der Temperatur an und trägt die Einheit K⁻¹. Der Temperaturkoeffizient wird auch als Temperaturbeiwert eines Widerstandes bezeichnet. Für viele, insbesondere metallische Widerstandsmaterialien ist dieser Temperaturkoeffizient positiv, wodurch sich mit einer Erhöhung der angelegten Temperatur größere Widerstandswerte ergeben. Im Falle des intakten Rußsensors 10 ist der Temperaturkoeffizient jedoch negativ, weil sich der Widerstandswert des intakten Rußsensors 10 maßgeblich aus der hohen elektrischen Leitfähigkeit des erwärmten Rußes zwischen den Messelektroden 3 herleitet. Es sei hier deutlich darauf hingewiesen, dass die Erkennung der Fehlerfreiheit des Rußsensors 10 mit Hilfe der zweigeteilten Struktur der Messelektroden, die später noch genauer beschrieben wird, einen wesentlichen Beitrag zur Kontrolle und Einhaltung der geltenden Abgasvorschriften leisten kann.

In der Auswerteschaltung 13 auf dem Mikrokontroler 20 existiert ein elektronischer Speicher 16. Der gemessene Temperaturkoeffizient des Rußsensors 10 kann nun mit dem im elektronischen Speicher 16 abgelegt werden. Wenn der von der Auswerteschaltung 13 gemessene Temperaturkoeffizient des Rußsensors 10 im zweiten Bereich wesentlich größer ist als der eines fehlerfreien Rußsensors 10 (erster Bereich), erkennt die Auswerteschaltung 13 die Fehlerhaftigkeit des Rußsensors 10. Ein entsprechendes Fehlersignal kann dann an ein Motormanagement im Kraftfahrzeug gesendet werden, wobei der Fahrer des Kraftfahrzeuges zum Austausch des Rußsensors 10 aufgefordert wird und der Fehler in der On-Board-Diagnose-Einheit 22 des Kraftfahrzeuges abgelegt wird.

Zur generellen Veranschaulichung des Gesamtsystems ist in Figur 4 ein Kraftfahrzeug 15 mit einer Brennkraftmaschine 14 dargestellt. Die Brennkraftmaschine 14 führt den von ihr erzeugten Abgasstrom 6 über ein Abgasrohr 5 ab. Im Abgasrohr 5 ist ein Rußsensor 10 angeordnet, der mit einer Auswerteschaltung 13 verbunden ist, die auch das Strommesselement 7 enthalten kann. Die unter Figur 3 ausführlich beschriebene Auswerteschaltung 13 gibt die Signale zur Fehlerhaftigkeit des Rußsensors 10 und/oder die Erkenntnisse über weitere Bestandteile im Ruß an die On-Board-Diagnose-Einheit 22 weiter. Sowohl das Strommesselement 7 zur Messung der Rußbeladung des Abgasstroms 6 als auch die Auswerteschaltung 13 zur fahrzeugeigen Funktionsdiagnose eines Rußsensors 10 in einem Kraftfahrzeug 15 können auf ein und demselben integrierten elektronischen Schaltkreis ausgebildet sein.

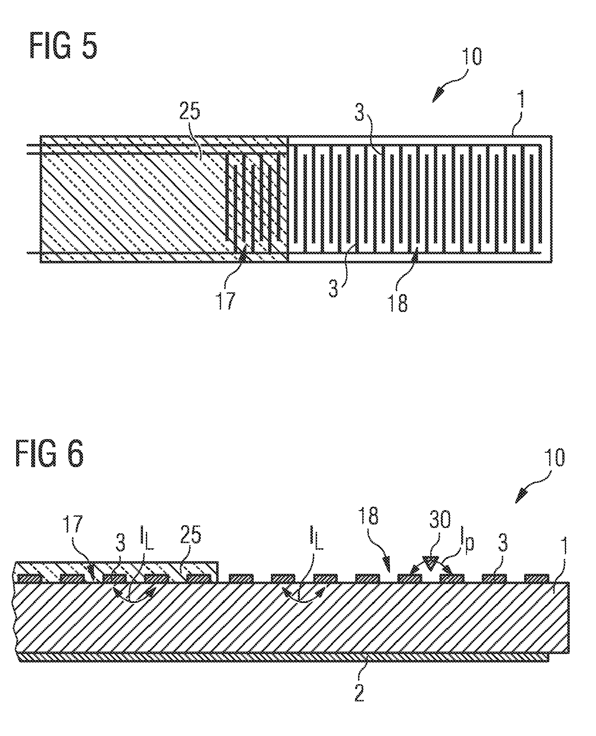

Fig. 5 zeigt den erfindungsgemäßen Rußsensor 10 mit einem Substrat 1 und der Struktur aus interdigital ineinandergreifenden Messelektroden 3. Die Struktur aus interdigital ineinandergreifenden Messelektroden 3 ist in einen ersten Bereich 17 und in einen zweiten Bereich 18 aufgeteilt. Auf dem ersten Bereich 17 können sich keine Rußpartikel ablagern. Die Ablagerung der Rußpartikel 4 erfolgt ausschließlich auf den zweiten Bereich 18. Zum Schutz vor den Rußpartikeln 4 ist der erste Bereich 17 mit einer Deckschicht 25 versehen. Diese Deckschicht kann zum Beispiel aus Siliziumnitrit, Siliziumdioxyd, Aluminiumdioxyd, Zirkonoxyd, LTCC oder HTCC bestehen. Der gesamte hier gezeigte Rußsensor 10 wird dem Abgasstrom 6 im Abgasrohr 5 ausgesetzt. Auf dem ersten Bereich 17 können sich weder Rußpartikel 4 noch Verschmutzungen aus Abgasstrom 6 ablagern. Auf dem zweiten Bereich 18 können sich Rußpartikel, Aschepartikel und auch Verschmutzungen aus dem Abgasstrom 6 ablagern. In der Freibrennphase erfolgt die Reinigung der Struktur aus interdigital ineinandergreifenden Messelektroden 3 auf dem zweiten Bereich 18. Da sich auf dem ersten Bereich 17 durch die Deckschicht 25 keine Partikel auf den Messelektroden 3 niederschlagen können, können die Messelektroden 3 im ersten Bereich 17 auch nicht frei gebrannt werden. Der gesamte Rußsensor 10 ist jedoch mit seinem ersten Bereich 17 und seinem zweiten Bereich 18 den übrigen im Abgasstrom herrschenden Bedingungen ausgesetzt. Eine wesentliche im Abgasstrom herrschende Bedingung ist die Temperatur, die auch auf den Rußsensor 10 einwirkt. Gerade in der Freibrennphase ändert sich die Leitfähigkeit des Substrates 1 wesentlich. Durch den Vergleich der Widerstandsmesswerte des ersten Bereiches 17 mit denen des zweiten Bereiches 18 kann ein Rückschluss auf die parasitäre Verschmutzung des zweiten Bereiches 18 erfolgen.

Figur 6 zeigt einen seitlichen Schnitt des Rußsensors 10. Zu erkennen ist das Substrat 1 auf dem die Messelektroden 3 angeordnet sind. Die Struktur aus interdigital ineinandergreifenden Messelektroden 3 ist wiederum in einen ersten Bereich 17 und einen zweiten Bereich 18 aufgeteilt. Der erste Bereich 17 ist von einer Deckschicht 25 überzogen. Mit I₁ sind hier die Leckströme bezeichnet, die über das Substrat 1 zwischen den Messelektroden 3 fließen können. Diese Leckströme I₁ werden besonders groß, wenn das Substrat 1 durch das Heizelement 2 auf die Abbranndtemperatur des Rußes aufgeheizt wird. Da jedoch sowohl der erste Bereich 17, als auch der zweite Bereich 18 gleichzeitig auf die Abbranndtemperatur des Rußes aufgeheizt werden, ist durch den Vergleich der Widerstandswerte über die Struktur aus Messelektroden 3 im ersten Bereich 17 und über die Struktur aus Messelektroden 3 im zweiten Bereich 18 erkennbar, ob sich parasitäre Ströme Ip gebildet haben. In Figur 6 ist beispielhaft ein Metallpartikel 30 zwischen zwei Messelektroden 3 im zweiten Bereich 18 dargestellt. Das Metallpartikel 30 lässt einen parasitäre Strom Ip fließen, der die Messwerte des Rußsensors 10 verfälscht, da der zusätzliche parasitäre Strom Ip den Widerstandswert der Struktur aus Messelektroden 3 im zweiten Bereich absenkt. Daher ist durch Vergleich der Widerstandswerte des ersten Bereiches 17 mit denen des zweiten Bereiches 18 eine Fehlfunktion des zweiten Bereiches 18 eindeutig identifizierbar.

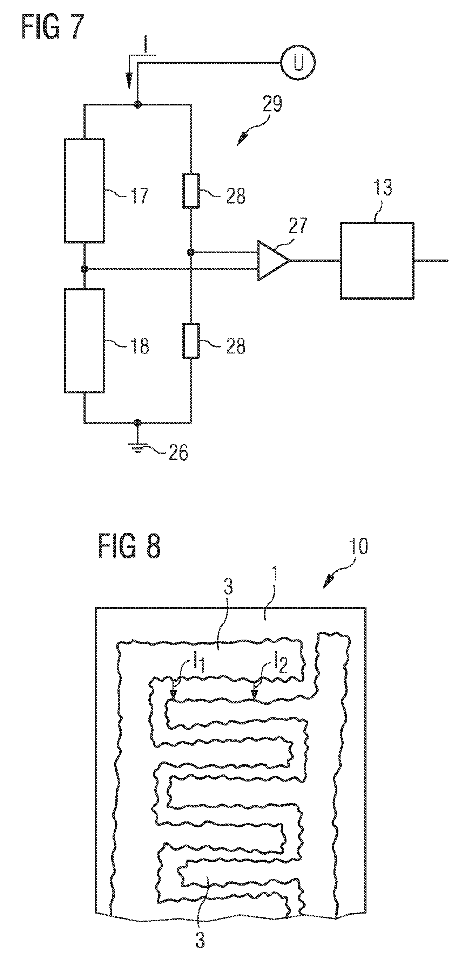

Eine elektrische Schaltung 29 zur Auswertung eines Rußsensors 10 ist in Figur 7 dargestellt. Hier ist der schematisch dargestellte erste Bereich 17 und der schematisch dargestellte zweite Bereich 18 mit zwei weiteren elektrischen Widerständen 28 zu einer Wheatstone'schen Brücke verschaltet. Die Änderung der Widerstandswerte des ersten Bereiches 17 und insbesondere des zweiten Bereiches 18 führen zu einer Verstimmung der Wheatstone'schen Brücke, die mit Hilfe des Operationsverstärkers 27 erkannt wird. Die vom Operationsverstärker 27 gelieferten Signale werden der elektronischen Auswerteschaltung 13 zugeführt. Wie bei Wheatstone'schen Brücken üblich fließt ein Strom I von einer Spannungsquelle U, die möglichst als Konstantspannungsquelle ausgebildet ist, über die Widerstände 17, 18 und 28 in den zwei Zweigen der Wheatstone'schen Brücke hin zu einem niedrigeren elektrischen Potential, das hier als Masse 26 dargestellt ist.

Figur 8 zeigt eine vergrößerte Darstellung eines Teiles des Rußsensors 10. Zu Erkennen ist das Substrat 1 auf dem die interdigital ineinandergreifenden Messelektroden 3 angeordnet sind. Die Messelektroden 3 können in Dünnschichttechnologie oder Dichtschichttechnologie ausgeführt sein. Gerade bei der Ausführung der Messelektroden 3 in Dickschichttechnologie ist es sehr schwierig, die Begrenzungen der Messelektroden 3 präzise zu gestalten. Die Randlinien der Messelektroden 3 sind in Figur 8 als Wellenlinien dargestellt, was der Realität des Randverlaufes von Dickschichtelektroden relativ nahe kommt. Man kann deutlich erkennen, dass sich zwischen den Messelektroden 3 unterschiedliche Strompfade ausbilden. Beim ersten Strompfad 1₁ ist der effektive Abstand zwischen den Messelektroden 3 relativ groß, womit hier relativ wenig Strom fließen würde und beim zweiten Strompfad I₂ ist der effektive Abstand zwischen den Messelektroden 2 sehr klein, womit hier ein hoher Strom fließen würde. Gerade im Bereich des zweiten Strompfades I₂ ist eine Entstehung von parasitären Strömen Ip sehr wahrscheinlich, weil schon ein kleines Störpartikel in diesem Bereich zu heftigen Kurzschlüssen führen kann.

## Patentansprüche

1. Rußsensor 10 zur Detektion von Rußpartikeln 4 in einem Abgasstrom 6 mit einer Struktur aus interdigital ineinander greifenden Messelektroden 3 die auf einem Substrat 1 aufgebracht sind, wobei der elektrische Widerstand zwischen den Messelektroden 3 als Maß für die Rußbeladung des Abgasstroms 6 gemessen wird, **dadurch gekennzeichnet, dass** die Struktur aus interdigital ineinander greifenden Messelektroden 3 in zwei Bereiche aufgeteilt ist, von denen sich auf einem ersten Bereich 17 keine Rußpartikel ablagern können und auf einem zweiten Bereich 18 die Ablagerung von Rußpartikeln 4 aus dem Abgasstrom 6 erfolgt und wobei der erste Bereich 17 und der zweite Bereich 18 gleichzeitig den übrigen in dem Abgasstrom 6 herrschenden Bedingungen ausgesetzt sind.

2. Rußsensor 10 nach Anspruch 1, **dadurch gekennzeichnet, dass** das Substrat 1 aus Keramik besteht.

3. Rußsensor 10 nach Anspruch 1 oder 2, dadurchgekennzeichnet **,** dass die Struktur aus interdigital ineinander greifenden Messelektroden 3 aus Dickschichtelektroden aufgebaut ist.

4. Rußsensor 10 nach Anspruch 1 oder 2, dadurchgekennzeichnet , dass die Struktur aus interdigital ineinander greifenden Messelektroden 3 aus Dünnschichtelektroden aufgebaut ist.

5. Rußsensor 10 nach einem der Ansprüche 2-4, **dadurch gekennzeichnet , dass** der erste Bereich 17 mit einer hochohmigen Deckschicht 25 versehen ist.

6. Rußsensor 10 nach einem der Ansprüche 2-4, **dadurch gekennzeichnet , dass** der erste Bereich 17 mit einer Deckschicht 25 mit einem genau definierten elektrischen Widerstand versehen ist.

7. Elektrischen Schaltung 29 zur Auswertung eines Rußsensors 10 nach den vorgenannten Ansprüchen, **dadurch gekennzeichnet, dass** der erste Bereich 17 und der zweite Bereich 18 mit zwei weiteren elektrischen Widerständen 28 zu einer Wheatstonschen Brücke verschaltet sind.
